## Europäisches Patentamt

## European Patent Office

## Office européen des brevets

(19)

(11) Veröffentlichungsnummer : **0 167 774
B1**

(12)

# EUROPÄISCHE PATENTSCHRIFT

(45) Veröffentlichungstag der Patentschrift :
19.10.88

(21) Anmeldenummer : 85106531.8

(22) Anmeldetag : 28.05.85

(51) Int. Cl.⁴ : **G 02 F   1/03**, **G 02 B   6/12**

(54) Steuerbarer Richtkoppler.

(30) Priorität : 01.06.84 DE 3420580

(43) Veröffentlichungstag der Anmeldung :
15.01.86 Patentblatt 86/03

(45) Bekanntmachung des Hinweises auf die Patenterteilung : 19.10.88 Patentblatt 88/42

(84) Benannte Vertragsstaaten :
DE FR GB

(56) Entgegenhaltungen :
DE-B- 2 614 871
US-A- 3 967 878
IEEE JOURNAL OF QUANTUM ELECTRONICS, Vol.
QE-19, No. 9, September 1983 R.C. ALFERNESS et al.
"High-Speed  Traveling-Wave  Directional  Coupler
Switch/Modulator = 1,32 um"
ELECTRONICS LETTERS, Vol. 18, No. 12, 10. Juni
1982 R.C. ALFERNESS et al. "Low Loss Fibre-Coupled Waveguid Directional Coupler Modulator"
IEEE JOURNAL OF QUANTUM ELECTRONICS, Vol.
QE-18, No. 5, Mai 1982 J. HEIBEI, E. VOGES, "Strip
Waveguides in LiNbO3 Fabricated by Combined
Metal Diffusion and Ion Implantation"

(73) Patentinhaber : Siemens Aktiengesellschaft Berlin
und München
Wittelsbacherplatz 2
D-8000 München 2 (DE)

(72) Erfinder : Auracher, Franz, Dr.
Eichenstrasse 26
D-8021 Baierbrunn (DE)

## Beschreibung

Die vorliegende Erfindung betrifft einen steuerbaren Richtkoppler nach dem Oberbegriff des Patentanspruchs 1.

Steuerbare Richtkoppler der genannten Art, beispielsweise in einem Substrat aus LiNbO$_3$, LiTaO$_3$, InGaAsP oder GaAlAs können als schnelle Modulatoren und Schalter eingesetzt werden (siehe dazu R.C. Alferness, L.L. Buhl und M.D. Divino : « Low-Loss Fibre-Coupled Waveguide Directional Coupler Modulator », Electr. Lett. 18 (1982) S. 490-491).

Aufgabe der vorliegenden Erfindung ist es, einen schnellen elektrooptischen Modulator oder Umschalter in Wellenleiterausführung nach dem Prinzip des steuerbaren Richtkopplers zu ermöglichen, der gleichzeitig hinsichtlich Steuerspannung und Ankoppelverlust bei Stoßkopplung an eine Monomodefaser optimiert ist.

Diese Aufgabe wird mit einem steuerbaren Richtkoppler der eingangs genannten Art gelöst, der die im kennzeichnenden Teil des Anspruchs 1 angegebenen Merkmale aufweist.

Für das Zustandekommen der Erfindung spielten folgende Überlegungen eine entscheidende Rolle : Um eine niedrige Steuerspannung bei vorgegebener Grenzfrequenz zu erzielen, sollte die maximale Länge L des Richtkopplers, d. h. der parallelen optischen Wellenleiter gewählt werden, die aufgrund des Laufzeiteffekts möglich ist. Ed 1 Sti/22.5.1984.

Außerdem sollte die Koppelstärke zwischen den parallelen Wellenleitern so gewählt werden, daß über der Länge L des Richtkopplers gerade vollständige Überkopplung erreicht wird.

Zur Erzielung niedriger Ankoppelverluste bei Stoßkopplung eines Wellenleiters des Richtkopplers an eine Monomode-Glasfaser muß die Nahfeldausdehnung des im optischen Wellenleiter des Richtkopplers geführten Lichts gut mit der in der Glasfaser übereinstimmen. Für diese Nahfeldverteilung ergibt sich dann ein bestimmter optimaler Abstand zwischen den parallelen Wellenleitern des Richtkopplers oder auch den Steuerelektroden, der die kleinste Steuerspannung zur Folge hat. Der Abstand zwischen den Wellenleitern des Richtkopplers und die Nahfeldverteilung legen jedoch auch die Koppelstärke zwischen den parallelen Wellenleitern fest und somit auch die Koppellänge L$_0$ für vollständige Überkopplung von einem Wellenleiter auf den anderen, so daß es im allgemeinen nicht möglich ist, die optimalen Parameter für die Betriebsspannung und Einfügeverluste bei vorgegebener Grenzfrequenz einzuhalten.

Erniedrigt man dagegen den Brechungsindex zwischen den parallelen Wellenleitern des Richtkopplers, zwischen denen die Überkopplung stattfindet, dann kann man die optimale Koppellänge L$_0$ = L einhalten, die sich aus der Laufzeitbegrenzung ergibt, und gleichzeitig den optimalen Abstand zwischen den parallelen Wellenleitern und auch den Steuerelektroden des Richtkopplers für minimale Steuerspannung wählen, während die Nahfeldparameter für minimalen Ankoppelverlust bei Stoßkopplung an Glasfasern eingestellt werden können.

Bevorzugte und vorteilhafte Ausführungsformen des erfindungsgemäßen Richtkopplers gehen aus den Ansprüchen 2 bis 8 hervor. Danach kann die Erniedrigung des Brechungsindex beispielsweise durch Ätzen eines Grabens mittels Ionen- oder Plasmaätzen, durch einen geeigneten Ionenaustauschprozeß oder durch eine Ionenimplantation erfolgen. Generell können für die einzelnen, beispielsweise für die obengenannten Substratmaterialien die dafür üblichen naß- oder trockenchemischen Ätzprozesse zur Anwendung kommen. Im Fall von LiNbO$_3$-Bauelementen kann beispielsweise eine Ionenimplantation mit He-Ionen oder eine Ionenätzung in einem fluorhaltigen Molekülgas, beispielsweise in einem CHF$_3$-Gas vorgenommen werden. Vorteilhafterweise kann zur Erniedrigung des Brechungsindex die Elektrodenstruktur selbst als Maske, insbesondere als Ätzmaske, dienen, so daß ein selbstjustierender Prozeß gegeben ist. Es müssen dann lediglich die Bereiche außerhalb der Elektrodenstruktur durch eine weitere Hilfsmaske abgedeckt werden, deren Justage jedoch unkritisch ist.

Der erfindungsgemäße Richtkoppler ist als Umschalter für Glasfasersysteme geeignet.

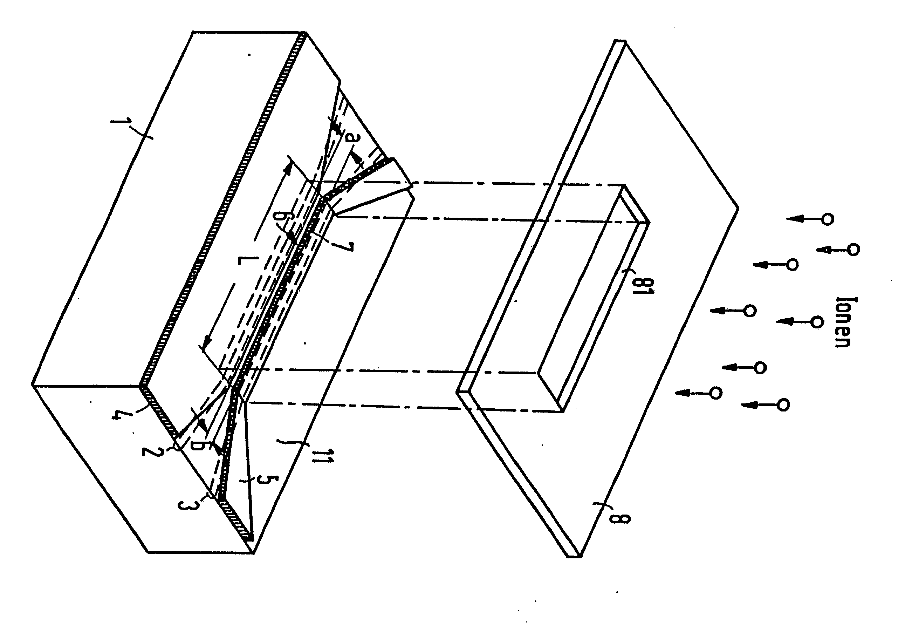

Die Erfindung wird anhand der Figur in der folgenden Beschreibung näher erläutert.

Die Figur zeigt in schematischer perspektivischer Darstellung einen steuerbaren Richtkoppler mit optischen Wellenleitern und einer Elektrodenstruktur an der Oberseite 11 des Substrats 1, über der eine Hilfsmaske angeordnet ist, die zusammen mit den Elektroden als Maske bei einer der Erzeugung der Brechzahlerniedrigung zwischen den Wellenleitern und Steuerelektroden mittels Ionenimplantation oder Ionenätzung verwendet wird.

Der steuerbare Richtkoppler nach der Figur ist an der Oberseite 11 des Substrats 1 in Form eines LiNbO$_3$-Kristalls ausgebildet und besteht aus den beiden im Substrat 1 an der Oberseite 11 ausgebildeten optischen Wellenleitern 2 und 3. Diese Wellenleiter 2 und 3 können beispielsweise durch Ionenaustausch oder Ionenimplantation im Substrat 1 erzeugt worden sein. Sie verlaufen eine Strecke der Länge L lang parallel und in einem Abstand a voneinander.

Auf der Oberseite 11 des Substrats 1 ist über den parallelen Wellenleitern 2 und 3 eine Steuerelektrodenstruktur ausgebildet, die aus einem Paar im Abstand voneinander angeordneter Steuerelektroden 4 und 5 besteht, welche die parallelen Wellenleiter 2 und 3 abdecken. Die beiden Steuerelektroden 4 und 5 sind über dem Zwischenraum 6 zwischen den parallelen Wellenleitern durch einen durchgehenden und in Längsrichtung der parallelen Wellenleiter 2 und 3 verlaufenden Spalt 7 einer Breite b voneinander getrennt, die etwa dem Abstand a zwischen den parallelen Wellenleitern 2 und 3 entspricht.

Die Brechzahl des Substrats 1 wird im Zwischenraum 6 zwischen den parallelen Wellenleitern 2 und 3 unterhalb des Spaltes 7 der Steuerelektroden 4 und 5 erniedrigt, die als Maske verwendet werden, so daß ein selbstjustierendes Verfahren gegeben ist. Damit die von den Steuerelektroden 4 und 5 nicht abgedeckten Bereiche der Oberseite 11 des Substrats 1 außerhalb des Spaltes 7 keiner die Brechzahl erniedrigenden Einwirkung ausgesetzt werden, wird über den Steuerelektroden 4 und 5 noch eine Hilfsmaske 8 mit einem Fenster 81 angeordnet, das so bemessen ist, daß die Hilfsmaske 8 den Spalt 7 zwischen den Steuerelektroden 4 und 5 freiläßt, die übrigen unabgedeckten Bereiche der Oberseite 11 des Substrats 1 aber abdeckt. Die den Brechungsindex erniedrigende Einwirkung, beispielsweise ein auf das Fenster 81 der Hilfsmaske 8 gerichteter Ionenstrahl, der eine Ätzung oder Implantation des Substrats 1 bewirkt, kann auf diese Weise nur auf das im Spalt 7 freiliegende Substrat einwirken. Dadurch entsteht im Zwischenraum 6 zwischen den parallelen optischen Wellenleitern 2 und 3 eine Brechungsindexerniedrigung, die bis zu einer bestimmten Tiefe des Substrats vorzunehmen ist.

Zum besseren Verständnis des Sinn und Zwecks dieser Brechungsindexerniedrigung im Zwischenraum 6 zwischen den parallelen optischen Wellenleitern 2 und 3 dienen folgende Ausführungen : Um zu sehr hohen Bandbreiten von 5 GHz und mehr bei niedrigen Steuerspannungen zu gelangen, muß der Richtkoppler so dimensioniert werden, daß die Länge L des Kopplers gleich der Koppellänge $L_0$ sei, die der Länge der Strecke entspricht, auf der vollständige Überkopplung stattfindet. Sollen typische Monomode-Glasfasern für beispielsweise die Wellenlänge $\lambda$ = 1,3 bis 1,5 $\mu$m mit niedrigem Koppelverlust an die optischen Wellenleiter 2 und 3 des Richtkopplers stoßgekoppelt werden, dann muß das Nahfeld des Wellenleiters 2 oder 3 im Substrat 1 aus elektrooptischem Material gut an das der Glasfaser angepaßt sein. Typische Fleckradien des Intensitätsprofils des in solchen Glasfasern geführten Lichts sind etwa 4 bis 5 $\mu$m.

Bei derart großen Nahfeldausdehnungen in den Wellenleitern 2 und 3 des Richtkopplers ist die Kopplung zwischen den parallelen Wellenleitern 2 und 3 bei Abständen a im Mikrometerbereich relativ stark. Dies hat zur Folge, daß man den Abstand a der parallelen Wellenleiter 2 und 3 ebenfalls relativ groß wählen muß, damit die Koppelstärke hinreichend klein und somit die Koppellänge $L_0$ hinreichend groß wird. Eine große Länge L des Richtkopplers und wegen der Bedingung L = $L_0$ auch eine große Koppellänge $L_0$ ist anzustreben, weil die erforderliche Steuerspannung umgekehrt proportional zur Länge L des Richtkopplers ist. Bei schnellen Richtkopplern wird die maximale Länge L durch die geforderte 3 dB-Grenzfrequenz fg aufgrund des Laufzeiteffekts begrenzt ; sie beträgt im Falle von LiNbO$_3$-Modulatoren $L^{mm} \approx$ 100 bis 150 GHz mm/fg$^{GHz}$.

Der große Abstand a zwischen den parallelen Wellenleitern 2 und 3 erfordert aber auch eine große Breite b des Spaltes 7 zwischen den Steuerelektroden 4 und 5, wodurch die erforderliche Steuerspannung gegenüber dem Wert für optimale Breite b des Spaltes 7 ansteigt.

Gelingt es jedoch, die Koppelstärke weitgehend unabhängig von der Nahfeldausdehnung in den optischen Wellenleitern 2 und 3 einzustellen, dann kann man den für niedrigste Betriebsspannung erforderlichen optimalen Abstand a zwischen den parallelen Wellenleitern 2 und 3 einhalten und somit gleichzeitig niedrigen Einfüge- oder Ankoppelverlust und die für die gegebene Grenzfrequenz niedrigste Steuerspannung erzielen. Dies kann dadurch gelöst werden, daß in dem Zwischenraum 6 zwischen den beiden parallelen optischen Wellenleitern 2 und 3 der Brechungsindex des Substrats 1 bis zu einer Tiefe erniedrigt wird, bei der die Koppelstärke weitgehend von dieser Tiefe unabhängig wird.

Wie schon erwähnt, kann die Erniedrigung des Brechungsindex beispielsweise durch Ätzen eines Grabens mittels Ionen- oder Plasmaätzen durch einen geeigneten Ionenaustauschprozeß oder durch eine Ionenimplantation erfolgen. Im Fall von LiNbO$_3$-Bauelementen kann beispielsweise eine Ionenimplantation von He-Ionen oder eine Ionenätzung in einem CHF$_3$-Gas vorgenommen werden. Im Fall von GaAlAs- oder InGaAsP-Bauelementen können ebenfalls die für diese Materialsysteme üblichen naß- oder trockenchemischen Ätzprozesse zur Anwendung kommen.

**Patentansprüche**

1. Steuerbarer Richtkoppler zur Stoßkopplung an Monomodefasern, mit zwei in einem Substrat (1) aus elektrooptischem Material an der Oberfläche (11) ausgebildeten, streckenweise parallel verlaufenden optischen Wellenleitern (2, 3) und mit einer auf der Oberfläche (11) ausgebildeten Steuerelektrodenstruktur aus einem Paar Steuerelektroden (4, 5), welches die beiden parallelen Wellenleiter (2, 3) abdeckt, dadurch gekennzeichnet, daß in dem Zwischenraum (6) zwischen den beiden parallelen optischen Wellenleitern (2, 3) der Brechungsindex gegenüber demjenigen des übrigen Substrats (1) außerhalb der Wellenleiter bis zu einer Tiefe des Substrats (1) erniedrigt ist, bei der die Koppelstärke weitgehend von dieser Tiefe unabhängig wird.

2. Koppler nach Anspruch 1, dadurch gekennzeichnet, daß der Brechungsindex durch einen zwischen den parallelen Wellenleitern (2, 3) ausgebildeten Graben im Substrat (1) herabgesetzt ist.

3. Koppler nach Anspruch 1, dadurch gekennzeichnet, daß der Brechungsindex durch eine zwischen den parallelen Wellenleitern (2, 3) vorgesehene Dotierung des Substrats (1) herabgesetzt ist.

4. Verfahren zur Herstellung eines Kopplers nach Anspruch 2, dadurch gekennzeichnet, daß der Graben durch Ätzen mittels eines naß- oder trockenchemischen Ätzverfahrens erzeugt wird.

5. Verfahren nach Anspruch 4, dadurch gekennzeichnet, daß der Graben durch Ionen- oder Plasmaätzverfahren erzeugt wird.

6. Verfahren nach Anspruch 5, dadurch gekennzeichnet, daß der Graben in einem Substrat (1) aus LiNbO₃ durch eine Ionenätzung in einem fluorhaltigen Molekülgas erzeugt wird.

7. Verfahren nach Anspruch 6, dadurch gekennzeichnet, daß der Graben durch eine Ionenätzung in einem CHF₃-Gas erzeugt wird.

8. Verfahren zur Herstellung eines Kopplers nach Anspruch 3, dadurch gekennzeichnet, daß die Dotierung durch einen Ionenaustauschprozeß oder durch eine Ionenimplantation erzeugt wird.

## Claims

1. A controllable directional coupling for impulse-coupling monomode fibres, comprising two optical waveguides (2, 3) which extend, partially in parallel, in a substrate (1) made of electro-optical material at the surface (11) thereof, and comprising a control electrode structure and that consists of a pair of control electrodes (4, 5) arranged on the surface (11), to cover the two parallel waveguides (2, 3), characterised in that, in the space (6) between the two parallel, optical waveguides (2, 3), the index of refraction is lower than that of the remainder of the substrate (1) outside the waveguides, to a depth of the substrate (1) at which the coupling strength is largely independent of this depth.

2. A coupler as claimed in Claim 1, characterised in that the index of refraction is reduced by means of a trench in the substrate (1) between the two parallel waveguides (2, 3).

3. A coupler as claimed in Claim 1, characterised in that the index of refraction is reduced by doping the substrate (1) between the parallel waveguides (2, 3).

4. A process for the production of a coupler as claimed in Claim 2, characterised in that the trench is formed by etching using a wet-chemical or dry-chemical etching procedure.

5. A process as claimed in Claim 4, characterised in that the trench is formed by ion or plasma etching procedures.

6. A process as claimed in Claim 5, characterised in that the trench is formed in a substrate (1) consisting of LiNbO₃ by ion etching in a molecular gas containing fluorine.

7. A process as claimed in Claim 6, characterised in that the trench is formed by ion etching in a CHF₃-gas.

8. A process for the production of a coupler as claimed in Claim 3, characterised in that doping is produced by an ion exchange process or by ion implantation.

## Revendications

1. Coupleur directif commandé, pour le couplage bout à bout de fibres monomodes, comprenant deux guides d'ondes optiques (2, 3) formés dans le dessus (11) d'un substrat (1) en matériau électro-optique, guides d'ondes qui s'étendent en parallèle sur un tronçon, ainsi qu'une structure d'électrodes de commande réalisée sur le dessus (11) du substrat et constituée d'une paire d'électrodes de commande (4, 5), structure qui recouvre les deux guides d'ondes parallèles (2, 3), caractérisé en ce que, dans l'espace intermédiaire (6) entre les deux guides d'ondes optiques (2, 3) parallèles, l'indice de réfraction est abaissé, comparativement à celui du reste du substrat (1), à l'extérieur des guides d'ondes, abaissement qui est réalisé jusqu'à une profondeur du substrat (1) où l'intensité de couplage est pratiquement indépendante de cette profondeur.

2. Coupleur selon la revendication 1, caractérisé en ce que l'indice de réfraction est abaissé par un fossé formé dans le substrat (1) entre les guides d'ondes parallèles. (2, 3).

3. Coupleur selon la revendication 1, caractérisé en ce que l'indice de réfraction est abaissé par un dopage du substrat (1) prévu entre les guides d'ondes parallèles (2, 3).

4. Procédé pour la fabrication d'un coupleur selon la revendication 2, caractérisé en ce que l'on réalise le fossé par gravure au moyen d'une opération de gravure chimique par voie humide ou par voie sèche.

5. Procédé selon la revendication 4, caractérisé en ce que l'on produit le fossé par une opération de gravure ionique ou par plasma.

6. Procédé selon la revendication 5, caractérisé en ce que l'on produit le fossé dans un substrat (1) en LiNbO₃ par une gravure ionique dans un gaz moléculaire contenant du fluor.

7. Procédé selon la revendication 6, caractérisé en ce que l'on produit le fossé par une gravure ionique dans un gaz contenant du CHF₃.

8. Procédé pour la fabrication d'un coupleur selon la revendication 3, caractérisé en ce que l'on effectue le dopage par un processus d'échange d'ions ou par une implantation d'ions.

Ionen